# EUROPEAN PATENT APPLICATION

(11) **EP 4 628 862 A1**
(43) Date of publication of application: **08.10.2025**
(21) Application number: 23897767.2
(22) Date of filing: 28.11.2023
(51) Int. Cl.: G01K 7/22, G01K 1/16

(54) **TEMPERATURE SENSOR**

(30) Priority: 29.11.2022 JP 2022190087
(71) Applicant: Mitsubishi Materials Corporation, Tokyo 100-8117 (JP)
(72) Inventor: EBISAWA, Satoshi, Chichibu-gun, Saitama 368-8502 (JP); IIDA, Teruyuki, Chichibu-gun, Saitama 368-8502 (JP); TAKANO, Daisuke, Chichibu-gun, Saitama 368-8502 (JP)
(74) Representative: Hoffmann Eitle
(86) International application number: PCT/JP2023/042525
(87) International publication number: WO 2024/117119

(57) **Abstract**

There is provided a temperature sensor capable of highly accurately measuring a temperature with higher thermal responsiveness. A temperature sensor according to the present invention includes a heat-sensitive element 2 having electrode surfaces on an upper surface and a lower surface; a pair of lead terminals 3 electrically connected to the heat-sensitive element; a resin sealing portion 4 that seals the heat-sensitive element and distal end portions of the pair of lead terminals with resin; and a conductive floating terminal 5 that is embedded in the resin sealing portion with at least a surface exposed and is separated apart from the pair of lead terminals, in which the heat-sensitive element is mounted on the floating terminal in a state where the electrode surface on the lower surface is bonded to the floating terminal with a conductive bonding material, and electrical connection between the floating terminal and one of the pair of lead terminals and electrical connection between the electrode surface on the upper surface with the other of the pair of lead terminals are performed by bonding wires.

## Description

### Technical Field

The present invention relates to a temperature sensor used in temperature measurement of a coil conductor or the like of a motor stator.

### Background Art

For example, since a motor stator or the like has a high temperature, control by a temperature sensor is essential. Therefore, a temperature sensor is attached to a measurement target object such as a coil conductor or the like of a motor stator.

As a temperature sensor installed in a state of being in contact with such a measurement target object, a temperature sensor with a flake-type thermistor mounted on an insulating substrate is known.

In the related art, for example, Patent Literature 1 discloses a thin temperature sensor including, in a temperature sensing portion, an insulating substrate having a flake-type thermistor mounting recess and a through-hole; a lower surface electrode portion formed in a lower region of the flake-type thermistor mounting recess; an upper surface electrode portion formed in an upper region of the through-hole; an upper surface electrode heat collecting portion formed in a lower region of the through-hole; a flake-type thermistor that is embedded in the flake-type thermistor mounting recess and of which a lower electrode is electrically connected to the lower electrode portion; and a conductive portion that electrically connects the upper surface electrode heat collecting portion to the upper surface electrode portion and the upper surface electrode portion to the upper electrode of the flake-type thermistor.

In addition, a temperature sensor is known in which a heat collecting film such as a metal film is provided on a contact surface with a measurement target object. For example, Patent Literature 2 discloses a temperature sensor including an insulating film; a thin film thermistor portion patterned with a thermistor material on a surface of the insulating film; a pair of comb-shaped electrodes patterned to have a plurality of comb-shaped portions on at least one of an upper side and a lower side of the thin film thermistor portion and facing each other; a pair of pattern electrodes connected to the pair of comb-shaped electrodes and patterned on a surface of the insulating film; and a heat collecting film patterned with a material having higher thermal conductivity than the insulating film immediately below the thin film thermistor portion on a back surface of the insulating film.

Furthermore, Patent Literature 3 also discloses a temperature sensor including a heat-sensitive element in which a heat-sensitive film and an electrode are formed on one surface of an insulating substrate and a heat collecting film of metal or the like is formed on the other surface of the insulating substrate.

### Citation List

### Patent Literature

Patent Literature 1: JP 2006-64497 A
Patent Literature 2: JP 2016-138773 A
Patent Literature 3: JP H04-3325 U

### Summary of Invention

### Technical Problem

The above-described technique in the related art has the following problems.

That is, in a temperature sensor for detecting a temperature of a measurement target object, such as a coil conductor of a motor stator, which becomes high in temperature, higher thermal responsiveness and thermal followability are required in order to quickly respond to heat of a motor and perform control. In the technique in the related art, a heat collecting film of metal or the like is formed on a surface in contact with a measurement target object to efficiently transfer heat to improve thermal responsiveness. However, since an insulating substrate or the like is interposed between the heat collecting film and the heat-sensitive element, it is difficult to obtain higher thermal responsiveness and thermal followability.

The present invention has been made in view of the above-described problems, and an object of the present invention is to provide a temperature sensor capable of highly accurately measuring a temperature with higher thermal responsiveness.

### Solution to Problem

In order to solve the above problems, the present invention adopts the following configuration. That is, a temperature sensor according to a first invention includes a heat-sensitive element having electrode surfaces on an upper surface and a lower surface; a pair of lead terminals electrically connected to the heat-sensitive element; a resin sealing portion that seals the heat-sensitive element and distal end portions of the pair of lead terminals with resin; and a conductive floating terminal that is embedded in the resin sealing portion with at least a surface exposed and is separated apart from the pair of lead terminals, in which the heat-sensitive element is mounted on the floating terminal in a state where the electrode surface on the lower surface is bonded to the floating terminal with a conductive bonding material, and electrical connection between the floating terminal and one of the pair of lead terminals and electrical connection between the electrode surface on the upper surface with the other of the pair of lead terminals are performed by bonding wires.

In this temperature sensor, since the heat-sensitive element is mounted on the floating terminal in a state where the electrode surface on the lower surface is bonded to the floating terminal with the conductive bonding material, the heat-sensitive element is in direct contact with the floating terminal functioning as a heat spreader, and thus high thermal responsiveness can be obtained.

In addition, since the electrical connection between the floating terminal and one of the pair of lead terminals and the electrical connection between the electrode surface on the upper surface and the other of the pair of lead terminals are performed by the bonding wires, the floating terminal is in a state of being thermally isolated from the pair of lead terminals, and the heat received by the floating terminal from the measurement target object is hardly dissipated from the lead terminal.

Therefore, in the temperature sensor, the exposed surface of the floating terminal, which functions as the heat spreader and is thermally isolated, is installed in a state of being in contact with the measurement target object, so that the heat can be efficiently transferred to the heat-sensitive element mounted on the floating terminal, and the temperature can be measured with high thermal responsiveness.

In the temperature sensor according to a second invention, in the first invention, the floating terminal is exposed to a lower surface and side surfaces of the resin sealing portion.

That is, in the temperature sensor, since the floating terminal is exposed to the lower surface and the side surfaces of the resin sealing portion, in a case where the floating terminal is installed by being embedded in the measurement target object, heat of the measurement target object can be received not only from the lower surface but also from the side surfaces and transmitted to the heat-sensitive element, and the thermal responsiveness can be further enhanced.

In the temperature sensor according to a third invention, in the first or second invention, the floating terminal is disposed apart from distal ends of the pair of lead terminals, and has a long plate shape or a prism shape extending in a direction orthogonal to an extending direction of the pair of lead terminals.

That is, in the temperature sensor, the floating terminal is disposed apart from the distal ends of the pair of lead terminals, and has a long plate shape or a prism shape extending in a direction orthogonal to an extending direction of the pair of lead terminals. Therefore, the exposed area of the lower surface is increased in the extending direction, and the temperature sensor is suitable for a case where the temperature sensor is installed on a measurement target object extending along the extending direction of the floating terminal. In addition, the entire floating terminal can be further separated apart from the lead terminal, and the thermal responsiveness is further improved.

In the temperature sensor according to a fourth invention, in the first or second invention, the resin sealing portion has a connector portion where base ends of the pair of lead terminals and a pair of external wires are connectable by inserting the pair of external wires.

That is, in the temperature sensor, since the resin sealing portion has the connector portion where the base ends of the pair of lead terminals and the pair of external wires can be connected by inserting the pair of external wires, the external wires can be easily connected by the connector portion.

In the temperature sensor according to a fifth invention, in the first invention, the pair of lead terminals extends in parallel to each other in the resin sealing portion, and the floating terminal extends between the pair of lead terminals.

That is, in the temperature sensor, since the floating terminal extends between the pair of lead terminals, the exposed area of the lower surface is increased in the extending direction, and the temperature sensor is suitable for a case where the temperature sensor is installed on the measurement target object extending along the extending direction of the lead terminal (the extending direction of the floating terminal).

### Advantageous Effects of Invention

According to the present invention, the following effects are achieved.

That is, with the temperature sensor according to the present invention, the heat-sensitive element is mounted on the floating terminal in a state where the electrode surface on the lower surface is bonded to the floating terminal with the conductive bonding material, and the electrical connection between the floating terminal and one of the pair of lead terminals and the electrical connection between the electrode surface on the upper surface and the other of the pair of lead terminals are performed by the bonding wires. Therefore, heat can be efficiently transferred to the heat-sensitive element mounted on the floating terminal that functions as the heat spreader and is thermally isolated, and the temperature can be measured with high thermal responsiveness.

In this manner, in the temperature sensor of the present invention, since the thermal responsiveness is increased, the temperature sensor is suitable for highly accurately measuring a temperature of a coil conductor or the like of a motor stator.

### Brief Description of Drawings

Fig. 1 is a perspective view of a temperature sensor illustrating an inside thereof in a see-through manner as viewed from above, in a first embodiment of a temperature sensor according to the present invention.
Fig. 2 is a perspective view illustrating a temperature sensor as viewed from below, in the first embodiment.
Fig. 3 is an enlarged perspective view of a main part illustrating a heat-sensitive element mounted on a floating terminal, in the first embodiment.
Fig. 4 is a cross-sectional view taken along a floating terminal illustrating a state in which a temperature sensor is embedded in a measurement target object, in the first embodiment.
Fig. 5 is a perspective view of a temperature sensor as viewed from a base end side in a second embodiment of the temperature sensor according to the present invention.
Fig. 6 is a perspective view of a temperature sensor illustrating an inside thereof in a see-through manner as viewed from above, in a third embodiment of the temperature sensor according to the present invention.
Fig. 7 is a perspective view of a temperature sensor illustrating an inside thereof in a see-through manner as viewed from above, in a fourth embodiment of a temperature sensor according to the present invention.
Fig. 8 is a perspective view of a temperature sensor illustrating an inside thereof in a see-through manner as viewed from above, in a fifth embodiment of the temperature sensor according to the present invention.
Fig. 9 is a graph of a thermal time constant simulation illustrating a temperature change with respect to time in an example of the temperature sensor according to the present invention.

### Description of Embodiments

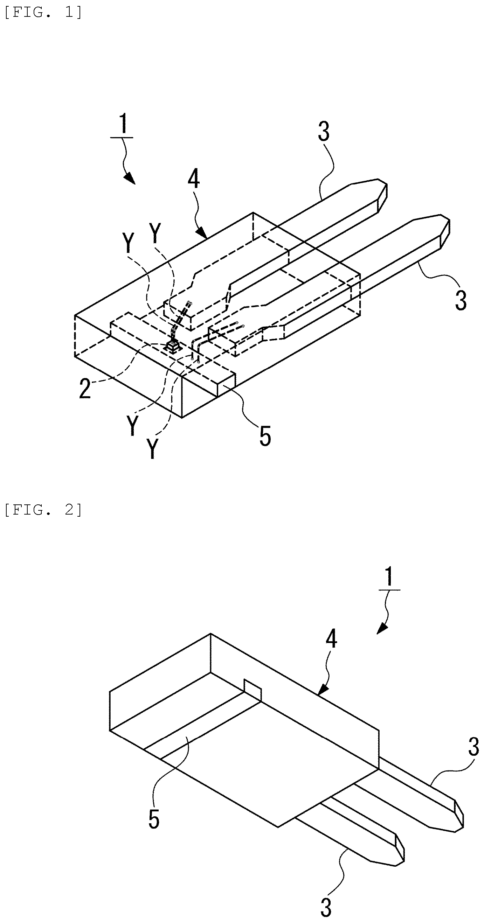

Hereinafter, a first embodiment of a temperature sensor according to the present invention will be described with reference to Figs. 1 to 4. Note that, in some of the drawings used in the following description, the scale is appropriately changed as necessary in order to make each portion recognizable or easily recognizable.

As illustrated in Figs. 1 to 4, a temperature sensor 1 of the present embodiment includes a heat-sensitive element 2 having electrode surfaces 2a on an upper surface and a lower surface, a pair of lead terminals 3 electrically connected to the heat-sensitive element 2, a resin sealing portion 4 in which the heat-sensitive element 2 and distal end portions of the pair of lead terminals 3 are sealed with resin, and a conductive floating terminal 5 embedded in the resin sealing portion 4 with at least one surface exposed and separated apart from the pair of lead terminals 3.

Note that in the temperature sensor 1 of the present embodiment, for example, at least a lower surface where the floating terminal 5 is exposed is placed in contact with the coil conductor of the motor stator to detect the temperature of the coil conductor.

In addition, the heat-sensitive element 2 is mounted on the floating terminal 5 in a state where the electrode surface 2a on the lower surface is bonded to the floating terminal 5 with a conductive bonding material 6.

The conductive bonding material 6 is, for example, solder.

Furthermore, electrical connection between the electrode surface 2a on the upper surface and the other of the pair of lead terminals 3 is performed by bonding wires Y, and electrical connection between the floating terminal 5 and one of the pair of lead terminals 3 is performed by bonding wires Y.

The floating terminal 5 is exposed to the lower surface and the side surfaces of the resin sealing portion 4.

In addition, the floating terminal 5 is disposed apart from the distal ends of the pair of lead terminals 3, and has a long plate shape or a prism shape extending in a direction orthogonal to an extending direction of the pair of lead terminals 3.

The heat-sensitive element 2 is a flake-type thermistor in which the electrode surfaces 2a as conductive material layers such as metal are formed on upper and lower surfaces of a plate-shaped thermistor material portion 2b.

The pair of lead terminals 3 is lead frames extending in parallel to each other in the resin sealing portion 4.

The resin sealing portion 4 is formed of, for example, an insulating resin such as an epoxy resin, and is molded in a plate shape or a low height box shape having a rectangular shape in plan view.

Note that the resin sealing portion 4 covers and seals the floating terminal 5, the heat-sensitive element 2, the bonding wires Y, and the distal end portion sides of the pair of lead terminals 3.

Two bonding wires Y are bridged between the floating terminal 5 and one of the pair of lead terminals 3, and two bonding wires Y are bridged between the electrode surface 2a on the upper surface and the other of the pair of lead terminals 3.

The floating terminal 5 is formed of a conductive material having high thermal conductivity such as copper.

The floating terminal 5 is formed in a rod shape (long plate shape or prism shape) having a rectangular cross section, and not only the lower surface but also both end surfaces of the floating terminal 5 are exposed from the resin sealing portion 4.

In addition, the lower surface of the floating terminal 5 is flush with the lower surface of resin sealing portion 4. Note that a thermal interface material (TIM) material or a heat dissipation sheet may be attached to the lower surface of the floating terminal 5 and the lower surface of the resin sealing portion 4, which are contact surfaces with the measurement target object, to absorb irregularities.

As described above, in the temperature sensor 1 of the present embodiment, since the heat-sensitive element 2 is mounted on the floating terminal 5 in a state where the electrode surface 2a on the lower surface is bonded to the floating terminal 5 with the conductive bonding material 6, the heat-sensitive element 2 is in direct contact with the floating terminal 5 functioning as a heat spreader, and thus high thermal responsiveness can be obtained.

In addition, since the electrical connection between the floating terminal 5 and one of the pair of lead terminals 3 and the electrical connection between the electrode surface 2a on the upper surface and the other of the pair of lead terminals 3 are performed by the bonding wires Y, the floating terminal 5 is in a state of being thermally isolated from the pair of lead terminals 3, and the heat received by the floating terminal 5 from the measurement target object is hardly dissipated from the lead terminal 3.

Therefore, in the temperature sensor 1, the exposed surface of the floating terminal 5, which functions as the heat spreader and is thermally isolated, is installed in a state of being in contact with the measurement target object, so that the heat can be efficiently transferred to the heat-sensitive element 2 mounted on the floating terminal 5, and the temperature can be measured with high thermal responsiveness.

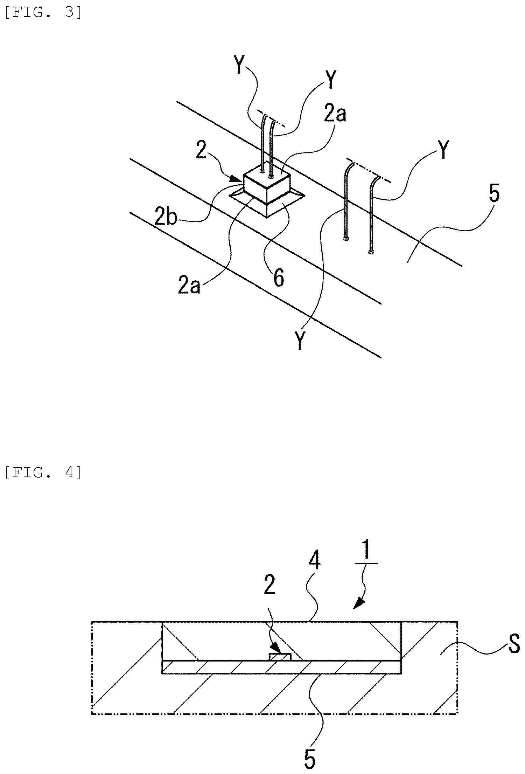

In addition, since the floating terminal 5 is exposed to the lower surface and the side surfaces of the resin sealing portion 4, in a case where the floating terminal 5 is installed by being embedded in a measurement target object S as illustrated in Fig. 4, heat of the measurement target object S can be received not only from the lower surface but also from the side surfaces and transmitted to the heat-sensitive element 2, and the thermal responsiveness can be further enhanced.

Furthermore, the floating terminal 5 is disposed apart from the distal ends of the pair of lead terminals 3, and has a long plate shape or a prism shape extending in a direction orthogonal to an extending direction of the pair of lead terminals 3. Therefore, the exposed area of the lower surface is increased in the extending direction, and the temperature sensor 1 is suitable for a case where the temperature sensor 1 is installed on a measurement target object extending along the extending direction of the floating terminal 5. In addition, the entire floating terminal 5 can be further separated apart from the lead terminals, and the thermal responsiveness is further improved.

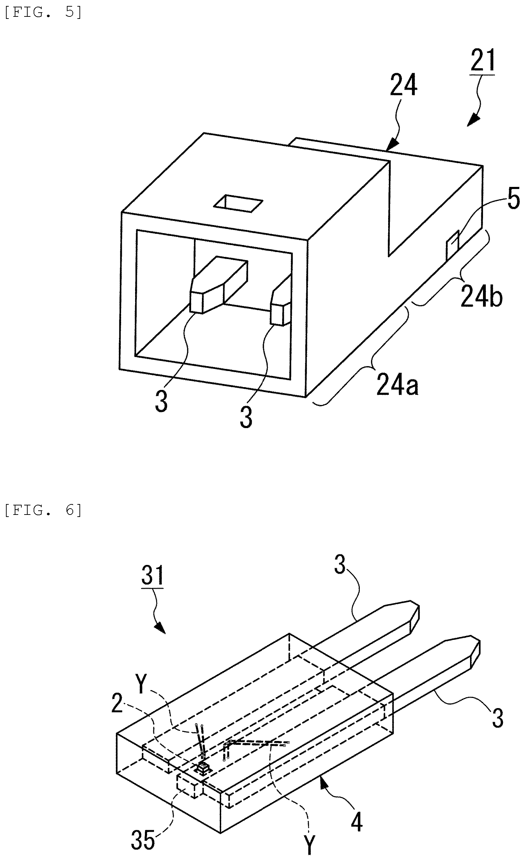

Next, second to fifth embodiments of the temperature sensor according to the present invention will be described below with reference to Figs. 5 to 8. Note that in the following description of each embodiment, the same components described in the above-described embodiment are denoted by the same reference numerals, and the description thereof will be omitted.

The difference between the second embodiment and the first embodiment is that, in the first embodiment, the resin sealing portion 4 is simply plate-shaped, and only the base end portions of the pair of lead terminals 3 protrude from the base end surface, whereas in a temperature sensor 21 of the second embodiment, as illustrated in Fig. 5, a resin sealing portion 24 has a connector portion 24a where the base ends of the pair of lead terminals 3 and a pair of external wires can be connected by inserting the pair of external wires.

That is, the resin sealing portion 24 of the second embodiment includes a distal end side sealing portion 24b that seals the heat-sensitive element 2, the floating terminal 5, and the distal end sides of the pair of lead terminals 3, and the connector portion 24a connected to the base end of the distal end side sealing portion 24b.

The connector portion 24a is open in a rectangular shape toward the base end side, and terminals of a pair of external wires can be inserted into the connector portion 24a. The base end portions of the pair of lead terminals 3 protrude inside the connector portion 24a.

As described above, in the temperature sensor 21 of the second embodiment, since the resin sealing portion 24 has the connector portion 24a where the base ends of the pair of lead terminals 3 and the pair of external wires can be connected by inserting the pair of external wires, the external wires can be easily connected by the connector portion 24a.

Next, a difference between the third embodiment and the first embodiment is that, in the first embodiment, the floating terminal 5 is disposed apart from the distal ends of the pair of lead terminals 3, and has a long plate shape or a prism shape extending in a direction orthogonal to the extending direction of the pair of lead terminals 3, whereas in a temperature sensor 31 of the third embodiment, as illustrated in Fig. 6, a floating terminal 35 extends between the pair of lead terminals 3.

That is, the floating terminal 35 of the third embodiment has a long plate shape or a prism shape, but extends between the pair of lead terminals 3 in the resin sealing portion 4 to be parallel with the lead terminal 3.

In addition, the pair of lead terminals 3 extends to the vicinity of the distal end of the resin sealing portion 4.

As described above, in the temperature sensor 31 of the third embodiment, since the floating terminal 35 extends between the pair of lead terminals 3, the exposed area of the lower surface is increased in the extending direction, and the temperature sensor 31 is suitable for a case where the temperature sensor 31 is installed on a measurement target object extending along the extending direction of the lead terminal 3 (the extending direction of the floating terminal 35).

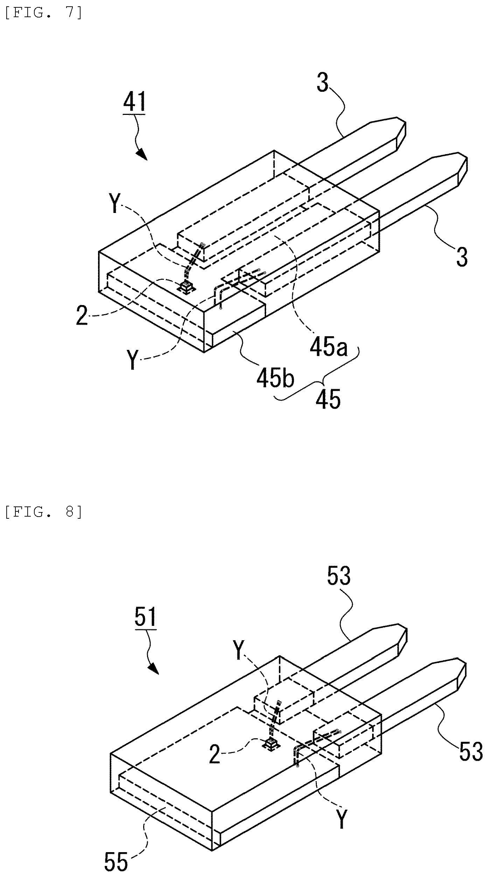

Next, a difference between the fourth embodiment and the third embodiment is that, in the third embodiment, the floating terminal 35 has a long plate shape or a prism shape extending between the pair of lead terminals 3, whereas in a temperature sensor 41 of the fourth embodiment, as illustrated in Fig. 7, a floating terminal 45 has a substantially T shape including a vertically long portion 45a extending between the pair of lead terminals 3 and a horizontally long portion 45b connected to a distal end of the vertically long portion 45a and having a rectangular shape in plan view elongated in a direction orthogonal to the extending direction of the lead terminal 3.

The horizontally long portion 45b is formed to be wider than the floating terminal 5 of the first embodiment.

As described above, in the temperature sensor 41 of the fourth embodiment, since the floating terminal 45 has a substantially T shape including the vertically long portion 45a and the horizontally long portion 45b, the exposed area of the lower surface is further increased, and higher thermal responsiveness can be obtained.

Next, the fifth embodiment is different from the first embodiment in that, in the first embodiment, the floating terminal 5 has a long plate shape or a prism shape extending in a direction orthogonal to the extending direction of the lead terminal 3, whereas in a temperature sensor 51 of the fifth embodiment, as illustrated in Fig. 7, a floating terminal 55 has a plate shape having a rectangular shape in plan view elongated in the extending direction of the lead terminal 3.

That is, in the fifth embodiment, a pair of lead terminals 53 is shorter than in the first embodiment, and the floating terminal 55 has a flat plate shape spreading in the extending direction of the lead terminal 3 accordingly.

As described above, in the temperature sensor 51 of the fifth embodiment, since the floating terminal 55 has a flat plate shape spreading in the extending direction of the lead terminal 3, the exposed areas of the lower surface and the side surfaces are increased, and the thermal responsiveness can be further obtained.

### Examples

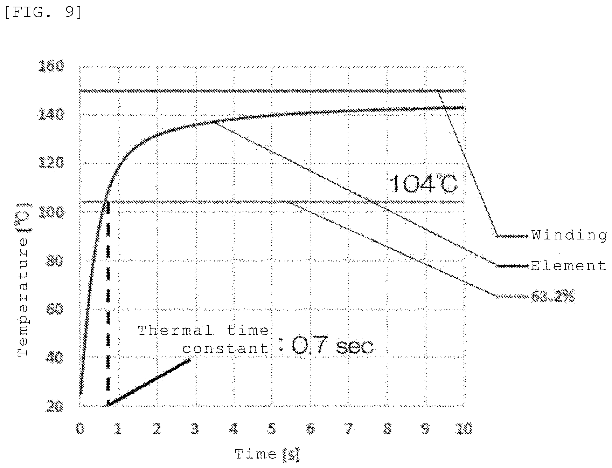

A thermal time constant simulation was performed when the temperature of the winding was instantaneously raised to 150°C with a setting in which the temperature sensor of the first embodiment was installed on the winding in a state where the lower surface of the floating terminal and the lower surface of the resin sealing portion, which were heat receiving surfaces, were in contact with the winding through the heat dissipation sheet. The results of the simulation are shown in Fig. 9.

Note that the simulation was performed assuming that the environmental temperature was 25°C and the thermal conductivity of the heat dissipation sheet was 2 W/mK.

In addition, the thermal time constant is the time until the heat-sensitive element reaches 104°C when the temperature of the winding is 150°C.

As can be seen from the results, in the temperature sensor of the present invention, the thermal time constant is 0.7 sec, the thermal responsiveness is high, and the temperature of the winding can be quickly measured.

Note that the technical scope of the present invention is not limited to the above-described embodiments and examples, and various modifications can be made without departing from the gist of the present invention.

For example, although a thermistor is employed in each of the above-described embodiments, a chip thermistor, a flake-type thermistor, a thin film thermistor, or the like can be employed as the thermistor, and a pyroelectric element or the like may be employed. In particular, a heat-sensitive element having an ability of heat resistance at 200°C is preferable.

### Reference Signs List

1, 21, 31, 41, 51 temperature sensor
2 heat-sensitive element
2a electrode surface
3 lead terminal
4, 24 resin sealing portion
5, 35, 45, 55 floating terminal
6 conductive bonding material
24a connector portion
Y bonding wire

## Claims

1. A temperature sensor comprising:
a heat-sensitive element having electrode surfaces on an upper surface and a lower surface;
a pair of lead terminals electrically connected to the heat-sensitive element;
a resin sealing portion that seals the heat-sensitive element and distal end portions of the pair of lead terminals with resin; and
a conductive floating terminal that is embedded in the resin sealing portion with at least a surface exposed and is separated apart from the pair of lead terminals,
wherein the heat-sensitive element is mounted on the floating terminal in a state where the electrode surface on the lower surface is bonded to the floating terminal with a conductive bonding material, and
electrical connection between the floating terminal and one of the pair of lead terminals and electrical connection between the electrode surface on the upper surface with the other of the pair of lead terminals are performed by bonding wires.

2. The temperature sensor according to claim 1,
wherein the floating terminal is exposed to a lower surface and side surfaces of the resin sealing portion.

3. The temperature sensor according to claim 1 or 2,
wherein the floating terminal is disposed apart from distal ends of the pair of lead terminals, and has a long plate shape or a prism shape extending in a direction orthogonal to an extending direction of the pair of lead terminals.

4. The temperature sensor according to claim 1 or 2,
wherein the resin sealing portion has a connector portion where base ends of the pair of lead terminals and a pair of external wires are connectable by inserting the pair of external wires.

5. The temperature sensor according to claim 1,
wherein the pair of lead terminals extends in parallel to each other in the resin sealing portion, and
the floating terminal extends between the pair of lead terminals.
